# FASCICULE DE BREVET EUROPEEN

(11) **EP 2 094 512 B1**
(45) Date de publication et mention de la délivrance du brevet: **15.09.2010**
(21) Numéro de dépôt: 07822573.7
(22) Date de dépôt: 14.11.2007
(51) Int. Cl.: B60C 9/20

(54) **PNEUMATIQUE POUR VEHICULE LOURD**
REIFEN FÜR SCHWERFAHRZEUG
TIRE FOR HEAVY VEHICLE

(30) Priorité: 06.12.2006 FR 0610698
(43) Date de publication de la demande: 02.09.2009
(73) Titulaire: Société de Technologie Michelin, 63000 Clermont-Ferrand (FR); Michelin Recherche et Technique S.A., 1763 Granges-Paccot (CH)
(72) Inventeur: BONDU, Lucien, 63800 La Roche Noire (FR)
(74) Mandataire: Le Cam, Stéphane Georges Elie
(86) Numéro de dépôt international: PCT/EP2007/062310
(87) Numéro de publication internationale: WO 2008/068133

(56) Documents cités:
- WO-A-02/090135
- FR-A- 2 827 221
- FR-A1- 2 791 001

## Description

L'invention concerne un pneumatique à armature de carcasse radiale destiné à équiper un véhicule lourd tel qu'un véhicule de transport ou un engin de « Génie Civil ». Il s'agit notamment d'un pneumatique qui présente une largeur axiale supérieure à 37 pouces.

Un tel pneumatique, destiné généralement à porter de lourdes charges, comprend une armature de carcasse radiale, et une armature de sommet composée d'au moins deux nappes de sommet de travail, formées d'éléments de renforcement inextensibles, croisés d'une nappe à la suivante et faisant avec la direction circonférentielle des angles égaux ou inégaux, et compris entre 10 et 45°.

Les armatures de sommet de pneumatiques radiaux, et plus particulièrement en ce qui concerne les pneumatiques de très grandes dimensions, sont soumises à de grandes déformations, qui engendrent entre les bords des nappes croisées des contraintes de cisaillement longitudinal et transversal (le cisaillement longitudinal est plus important que le transversal lorsque les câbles de nappes croisées font avec la direction circonférentielle des angles faibles), en même temps qu'une contrainte de délamination, contrainte radiale ayant tendance à séparer radialement les bords des deux nappes. Lesdites contraintes sont dues en premier lieu à la pression de gonflage du pneumatique, qui fait en sorte que la pression dite de ceinturage entre armature de carcasse et armature de sommet tend à provoquer l'expansion circonférentielle de ladite armature de sommet ; Lesdites contraintes sont en outre dues à la charge portée par le pneumatique en roulage avec naissance d'une surface de contact entre sol et pneumatique ; Lesdites contraintes sont encore dues à la mise en dérive du pneumatique en roulage. Ces contraintes génèrent des fissures dans le mélange caoutchouteux avoisinant l'extrémité de la nappe la plus courte, fissures qui se propagent dans ledit mélange et qui pénalisent l'endurance d'une armature de sommet, et donc du pneumatique.

Une amélioration nette de l'endurance a été procurée par l'emploi dans l'armature de sommet d'au moins une nappe de sommet de protection ayant une largeur axiale supérieure à la largeur de la nappe de travail la plus large axialement.

On entend par « axiale », une direction parallèle à l'axe de rotation du pneumatique et par « radiale » une direction coupant l'axe de rotation du pneumatique et perpendiculaire à celui-ci. L'axe de rotation du pneumatique est l'axe autour duquel il tourne en utilisation normale. Le plan médian circonférentiel est un plan perpendiculaire à l'axe de rotation du pneu et qui divise le pneumatique en deux moitiés. Un plan radial est un plan qui contient l'axe de rotation du pneumatique.

Une autre solution telle que décrite dans le brevet FR 2 421 742 consiste à répartir plus favorablement les contraintes génératrices de séparation entre nappes de sommet de travail, consécutives à la mise en dérive du pneumatique, en multipliant le nombre de nappes de travail.

La multiplication des nappes de travail n'est pas sans inconvénient, notamment au centre de l'armature de sommet où le nombre de nappes influe directement sur la rigidité de flexion du sommet du pneumatique. Lorsque cette rigidité augmente, il s'ensuit que des chocs intervenant sur le sommet du pneumatique, tels que notamment le passage sur des cailloux de grandes dimensions, peuvent conduire à un endommagement irrémédiable du pneumatique, du fait de cette rigidité accrue.

La demande de brevet WO 00/54992 a encore proposé pour éviter cet inconvénient de réaliser une armature de sommet de travail constituée d'au moins trois nappes de travail continues et d'au moins une demi-nappe, de chaque côté du plan médian circonférentiel, disposée entre les bords d'au moins deux nappes de travail continues radialement adjacentes et dont la particularité est notamment de présenter un angle avec la direction circonférentielle supérieur à 25° et supérieur d'une quantité comprise entre 5° et 15° au plus grand des angles des nappes de travail continues. Les résultats obtenus avec ce type d'architecture ont été tout à fait satisfaisants pour les dimensions de pneumatiques testées circulant dans sur des terrains usuels.
La demande de brevet FR-A-2827221 divulgue un pmeumatique ayant tes caractéristiques techniques du préamble de la revendication 1.

Dans leurs études et notamment durant l'étude de la réalisation de pneumatiques, les inventeurs se sont donnés pour mission de définir une architecture de sommet de pneumatiques pour des engins lourds permettant d'obtenir une endurance satisfaisante notamment dans le cas de roulage dans des conditions particulièrement sévères présentant notamment des passages sinueux sur des terrains caillouteux.

Ce but a été atteint selon l'invention par un pneumatique pour engin lourd, comprenant une armature de carcasse radiale surmontée radialement d'une armature de sommet de travail, composée d'au moins quatre nappes continues de sommet de travail formées d'éléments de renforcement croisés d'une nappe à la suivante en faisant avec la direction circonférentielle des angles α1, α2, α3, α4, compris entre 5 et 30°, l'armature de sommet de travail étant radialement surmontée d'une armature de protection composée d'au moins une nappe d'éléments de renforcement métallique élastiques faisant avec la direction circonférentielle un angle γ, compris entre 10 et 30°, l'extrémité de ladite nappe de protection étant axialement extérieure aux extrémités des nappes de travail, l'armature de sommet de travail étant complétée de chaque côté du plan médian circonférentiel par une unique demi-nappe de travail dont les éléments de renforcement font avec la direction circonférentielle un angle β, supérieur à 30°, la demi-nappe de travail étant radialement intérieure et adjacente à la nappe continue de travail radialement la plus à l'extérieur, son extrémité axialement extérieure étant axialement extérieure aux extrémités des nappes de travail continues et les éléments de renforcements de la demi nappe de travail, les éléments de renforcement de la nappe continue de travail radialement la plus à l'extérieur et les éléments de renforcement de la nappe de protection dont l'extrémité est axialement extérieure aux extrémités des nappes de travail étant orientés dans la même direction.

L'orientation dans la même direction des éléments de renforcement de la demi nappe, des éléments de renforcement de la nappe continue de travail radialement la plus à l'extérieur et des éléments de renforcement de la nappe de protection dont l'extrémité est axialement extérieure aux extrémités des nappes de travail signifie au sens de l'invention que les éléments de chacune de ces nappes sont orientés de la même façon par rapport à la direction circonférentielle du pneumatique ; en d'autres termes, les angles formés entre la direction circonférentielle et les éléments de renforcement de ces trois nappes sont soit tous positifs soit tous négatifs. Par contre, la valeur des angles peut clairement être différente d'une nappe à l'autre.

Un pneumatique tel qu'il vient d'être défini selon l'invention, c'est-à-dire possédant une armature de sommet telle que décrite permet d'améliorer l'endurance des pneumatiques pour véhicule lourd. Il s'avère en effet que, notamment dans les conditions de roulage testées, les architectures proposées semblent réduire les contraintes de cisaillement aux bords du pneumatique et limitent les risques de dégradation du pneumatique notamment aux extrémités des nappes axialement les plus larges, ce qui favorise l'endurance du pneumatique.

La combinaison, telle que le propose l'invention, d'une demi-nappe de travail axialement plus large que les quatre nappes continues de travail, l'ensemble étant surmonté d'une nappe de protection, dont l'extrémité est axialement extérieure aux extrémités des nappes de travail, telle que les angles des éléments de renforcement de la demi nappe, de la nappe continue de travail et de la nappe de protection soient orientés dans la même direction conduit à cette amélioration de l'endurance des pneumatiques selon l'invention dans des conditions de roulage particulièrement sévères. En effet, l'orientation identique des éléments de renforcement de la nappe de travail radialement la plus à l'extérieur et de la nappe de protection conduit de manière inattendue à une amélioration de l'endurance du pneumatique alors qu'une triangulation formée par ces deux nappes est absente.

Selon un mode de réalisation préféré de l'invention, la demi-nappe recouvre, radialement, les extrémités des nappes de sommet de travail continues qui lui sont radialement intérieures.

De préférence également, une nappe continue de travail est axialement plus large que la nappe continue de travail qui lui est radialement intérieure et adjacente. En d'autres termes, la largeur axiale des nappes continues de travail augmente avec l'éloignement, selon la direction radiale, de l'armature de carcasse.

Selon ces modes de réalisation préférés de l'invention, le recouvrement des extrémités des nappes de sommet continues par la demi-nappe et l'agencement des différentes nappes continues de travail permettent d'améliorer la répartition des efforts dans l'ensemble de l'armature sommet en optimisant les couplages des nappes.

Les nappes continues et les demi-nappes de sommet de travail sont de préférence composées d'éléments de renforcement métalliques inextensibles, de manière à assurer le plus efficacement possible la fonction de frettage de la nappe carcasse.

Avantageusement selon l'invention, les éléments de renforcement de la demi-nappe ont un angle β supérieur d'au moins 10° au plus petit des angles α₁, α₂, α₃, α₄.

Une telle nappe permet notamment de limiter le cisaillement entre les renforts de ladite nappe et le cisaillement avec les gommes entourant la dite nappe et ainsi de limiter les risques de clivage entre les nappes.

Une variante avantageuse de l'invention prévoit qu'au moins les éléments de renforcement des deux nappes continues de travail radialement les plus proches de l'armature de carcasse font avec la direction circonférentielle des angles α₁, α₂ inférieurs à 12° et de préférence inférieurs à 8°.

Une telle variante de réalisation de l'invention permet notamment d'apporter de la stabilité en ce qui concerne d'éventuelles évolutions des profils des pneumatiques suite à des fonctionnements à des températures élevées.

De façon connue en soi, notamment pour améliorer la résistance du pneumatique aux coupures et perforations, l'armature de protection est avantageusement composée d'au moins deux nappes d'éléments de renforcement métalliques élastiques. Des variantes de réalisation de l'invention prévoient des nappes de protection constituées de bandelettes se recouvrant partiellement. Quel que soit le type de nappes de protection utilisé, les renforts élastiques utilisés peuvent être des éléments disposés de manière rectiligne ou sous forme sinusoïdale.

De préférence, la nappe de protection radialement intérieure a une largeur axiale plus grande que la largeur des nappes de travail.

De préférence encore, les éléments de renforcement des nappes de protection sont croisés entre eux.

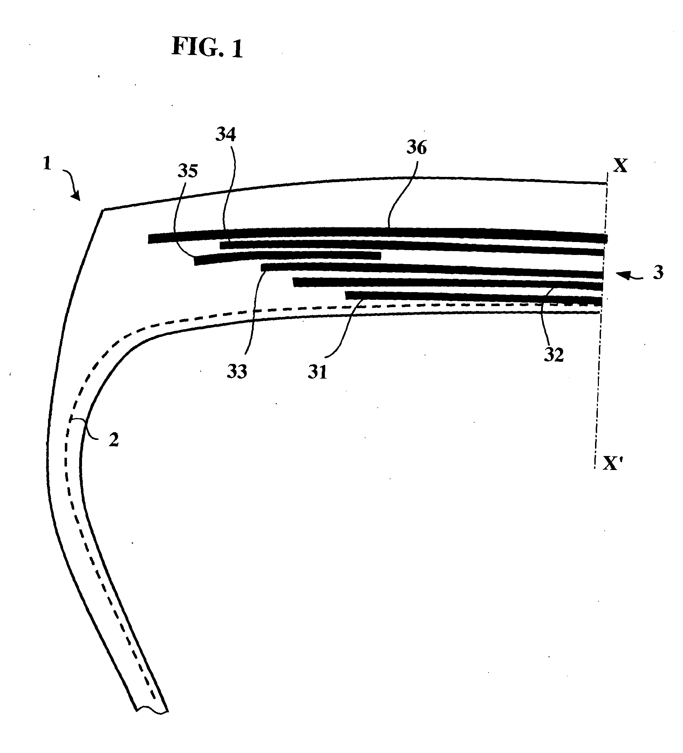

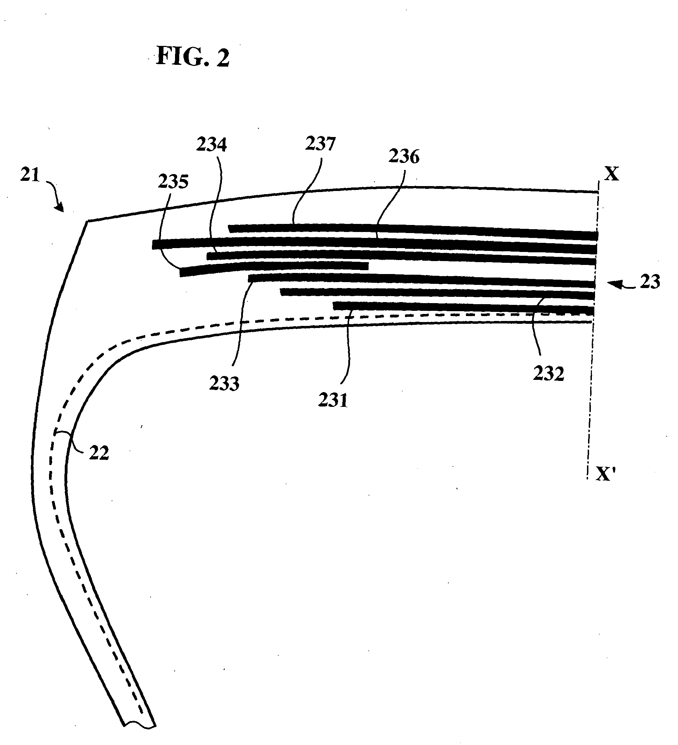

D'autres détails et caractéristiques avantageux de l'invention ressortiront ci-après de la description d'exemples de réalisation de l'invention en référence aux figures 1 et 2 qui représentent :
- figure 1, une représentation schématique d'un pneumatique selon un premier mode de réalisation de l'invention,
- figure 2, une représentation schématique d'un pneumatique selon un deuxième mode de réalisation de l'invention.

Les figures ne sont pas représentées à l'échelle pour en simplifier la compréhension. Les figures ne représentent que la moitié des architectures qui se prolongent de manière symétrique par rapport à l'axe XX' qui représente le plan médian circonférentiel d'un pneumatique.

Les valeurs dimensionnelles qui sont données sont des valeurs théoriques, c'est-à-dire qu'il s'agit des valeurs de consigne lors de la fabrication des pneumatiques ; les valeurs réelles peuvent être légèrement différentes notamment du fait de l'incertitude liée au procédé de fabrication pour ce type de pneumatiques.

En outre, concernant les angles des renforts des nappes, les valeurs données sont les valeurs minimales c'est-à-dire les valeurs correspondant à la zone d'une nappe la plus proche de l'axe médian du pneumatique. En effet, l'angle desdits renforts varie selon la direction axiale du pneumatique notamment du fait du galbe de celui-ci.

La Figure 1 représente un schéma vu selon une coupe radiale d'un pneumatique 1 réalisé conformément à l'invention. Le pneumatique 1 de dimension 59/80R63 comporte une armature de carcasse 2 ancrée dans deux bourrelets, non représentés sur les figures. Cette armature de carcasse 2 est frettée par une armature de sommet 3, formée radialement de l'intérieur vers l'extérieur :
- d'une première nappe 31 formée de câbles métalliques inextensibles orientés par rapport à la direction circonférentielle selon un angle α₁ égal à 24°, la nappe 31 présente une largeur égale à 600 mm.
- d'une deuxième nappe 32 formée de câbles métalliques inextensibles, orientés par rapport à la direction circonférentielle selon un angle α₂ égal à 24° et croisés avec les câbles métalliques de la couche 31 ; la nappe 32 présente une largeur égale à 720 mm et est donc axialement plus large que la nappe 31,
- d'une nappe de travail 33 formée de câbles métalliques orientés par rapport à la direction circonférentielle selon un angle α₃ égal à 24° et croisés avec les câbles métalliques de la nappe 32. La nappe 33 est axialement plus large que la nappe 32 et présente une largeur égale à 820 mm.
- d'une demi-nappe 35 formée de câbles métalliques orientés par rapport à la direction circonférentielle selon un angle β égal à 35° et croisés avec les câbles métalliques de la nappe 33. La largeur axiale de la demi-nappe 35 est égale à 250 mm. Son extrémité axialement intérieure est axialement intérieure à l'extrémité de la nappe 31.
- d'une nappe de travail 34 formée de câbles métalliques orientés par rapport à la direction circonférentielle selon un angle α₄ égal à 24° et croisés avec les câbles métalliques de la nappe 33. Les câbles métalliques de la nappe 34 sont donc orientés selon la même direction que les câbles métallique de la demi-nappe 35. La nappe 34 présente une largeur égale à 950 mm et est donc axialement plus large que la nappe 33,
- d'une couche de protection 36 formée de câbles métalliques extensibles orientés par rapport à la direction circonférentielle selon un angle γ égal à 24°, selon la même direction que les câbles métallique de la nappe 34. Les câbles métalliques de la nappe 36 sont donc également orientés selon la même direction que les câbles métallique de la demi-nappe 35. La nappe 36 présente une largeur égale à 1200 mm.

Sont dits élastiques des câbles présentant sous une force de traction égale à la charge de rupture un allongement relatif au moins égal à 4%, alors que des câbles sont dits inextensibles lorsque leur allongement relatif, mesuré pour 10% de la force de rupture, est inférieur à 0,2%.

La figure 2 illustre une deuxième variante de réalisation de l'invention. Le pneumatique 21 diffère de celui de la figure 1 d'une part en ce que les angles α₁ et α₂, des éléments de renforcements des nappes 231 et 232 sont égaux en valeur absolue à 5°, les éléments de renforcement demeurant croisés d'une nappe à la suivante.

D'autre part, le pneumatique 21 comporte une deuxième nappe de protection 237 dont les éléments de renforcements font un angle avec la direction circonférentielle égal à 24° et sont croisés avec les éléments de renforcement de la nappe de protection 236 radialement intérieure.

L'extrémité axialement extérieure de la nappe de protection 237 la moins large est comprise entre les extrémités axialement extérieures de la demi-nappe 235 et l'extrémité de la nappe de protection 236. La nappe de protection 237 présente une largeur égale à 920 mm.

Des essais comparatifs ont été réalisés sur la base du pneumatique présenté sur la figure 1. La comparaison a été faite avec un pneumatique de référence identique si ce n'est qu'il ne présente pas les demi-nappes 35 et que les éléments de renforcement de la nappe de protection 36 sont croisés avec les éléments de renforcement de la nappe de travail 34.

Les pneumatiques ont été testés sur un même véhicule, celui-ci circulant sur le même tracé simulant un parcours très pénalisant pour les pneumatiques et conduit par le même conducteur.

Les essais ont confirmé après des roulages sur une distance 8000 km que les pneumatiques selon l'invention ne présente aucune amorce d'altération alors que l'examen des pneumatiques de référence montrent des amorces de fissuration.

L'interprétation de ces exemples ne doit pas se faire de façon limitative, les variantes de réalisation étant nombreuses ; Il est notamment possible d'avoir un nombre de nappes de travail continues plus importants.

L'invention prévoit encore selon d'autres variantes de réalisation d'inverser l'ordre radial des deux nappes de protection, les câbles desdites nappes pouvant alors être croisés entre eux ou bien orientés dans la même direction. Par inversion de l'ordre des deux nappes de protection selon l'invention, il faut comprendre que l'invention prévoit d'inverser les largeurs desdites nappes de protection. La nappe de protection radialement intérieure peut ainsi être la nappe de protection axialement la plus étroite.

## Revendications

1. Pneumatique (1) pour engin lourd, comprenant une armature de carcass (2) radiale surmontée radialement d'une armature de sommet de travail, composée d'au moins quatre nappes continues de sommet de travail (31,32,33,34) formées d'éléments de renforcement croisés d'une nappe à la suivante en faisant avec la direction circonférentielle des angles α₁, α₂, α₃, α₄, compris entre 5 et 30°, l'armature de sommet de travail étant radialement surmontée d'une armature de protection (36) composée d'au moins une nappe d'éléments de renforcement métallique élastiques faisant avec la direction circonférentielle un angle γ, compris entre 10 et 30°, l'extrémité de ladite armature de protection étant axialement extérieure aux extrémités des nappes de travail, **caractérisé en ce que** l'armature de sommet de travail est complétée de chaque côté du plan médian circonférentiel par une unique demi-nappe de travail (35) ont les éléments de renforcement font avec la direction circonférentielle un angle β, supérieur à 30°, **en ce que** la demi-nappe de travail (35) est radialement intérieure et adjacente à la nappe continue de travail (34) radialement la plus à l'extérieur, **en ce que** son extrémité axialement extérieure est axialement extérieure aux extrémités des nappes de travail continues et **en ce que** les éléments de renforcements de la demi nappe de travail (35) les éléments de renforcement de la nappe continue de travail (34) radialement la plus à l'extérieur et les éléments de renforcement de l'armature de protection (26) dont l'extrémité est axialement extérieure aux extrémités des nappes de travail sont orientés dans la même direction.

2. Pneumatique selon la revendication 1, **caractérisé en ce que** la demi-nappe de travail (35) recouvre, radialement, les extrémités des nappes de sommet de travail continues (34,32,33) qui lui sont radialement intérieur.

3. Pneumatique selon la revendication 1 ou 2, **caractérisé en ce que** une nappe continue de travail (32,33,34) est axialement plus large que la nappe continue de travail qui lui est radialement intérieure et adjacente.

4. Pneumatique selon l'une des revendications 1 à 3, **caractérisé en ce que** les nappes continues (31,32,33,34) et les demi-nappes de travail (35) sont composées d'éléments de renforcement métalliques inextensibles, ayant un allongement relatif, mesuré pour 10% de fonce de
rupture, inférieur à 0.2%.

5. Pneumatique selon la revendication 1 à 4, **caractérisé en ce que** les éléments de renforcement de la demi-nappe de travail (35) ont un angle β supérieur d'au moins 10° au plus petit des angles α₁, α₂, α₃, α₄.

6. Pneumatique selon l'une des revendications 1 à 5, **caractérisé en ce qu'**au moins les éléments de renforcement des deux nappes continues de travail (31,32) radialement les plus proches de l'armature de carcasse font avec la direction circonférentielle des angles α₁, α₂ inférieurs à 12° et de préférence inférieurs à 8°.

7. Pneumatique selon l'une des revendications précédentes, **caractérisé en ce que** l'armature de protection (36) est composée d'au moins deux nappes d'éléments de renforcement métallique élastiques.

8. Pneumatique selon la revendication 7, **caractérisé en ce que** l'armature de protection (36) est composée d'au moins deux nappes d'éléments de renforcement métallique élastiques croisés d'une nappe à la suivante.

## Claims

1. Heavy vehicle tyre (1), comprising a radial carcass reinforcement (2), radially surmounted by a working crown reinforcement, made up of at least four continuous working crown plies (31, 32, 33, 34) formed of reinforcing elements which, from one ply to the next, cross one another making the angles α₁, α₂, α₃, α₄ of between 5 and 30° with the circumferential direction, the working crown reinforcement being radially surmounted by a protective reinforcement (36) made up of at least one ply of elastic metal reinforcing elements that make an angle γ of between 10 and 30° with the circumferential direction, the end of the said protective reinforcement being axially on the outside at the ends of the working plies, **characterized in that** the working crown reinforcement is supplemented on each side of the circumferential mid-plane by a single working half-ply (35) the reinforcing elements of which make an angle β greater than 30° with the circumferential direction, **in that** the working half-ply (35) is radially on the inside of and adjacent to the radially outermost continuous working ply (34), **in that** its axially outer end is axially on the outside of the ends of the continuous working plies, and **in that** the reinforcing elements of the working half-ply (35), the reinforcing elements of the radially outermost continuous working ply (34) and the reinforcing elements of the protective reinforcement (36) the end of which is axially on the outside of the ends of the working plies are oriented in the same direction.

2. Tyre according to Claim 1, **characterized in that** the working half-ply (35) radially covers the ends of the continuous working crown plies (31, 32, 33) that lie radially on the inside thereof.

3. Tyre according to Claim 1 or 2, **characterized in that** one continuous working ply (32, 33, 34) is axially wider than the continuous working ply radially on the inside of and adjacent to it.

4. Tyre according to one of Claims 1 to 3, **characterized in that** the continuous plies (31, 32, 33, 34) and the working half-plies (35) are made up of inextensible metal reinforcing elements, having a relative elongation, measured at 10% of the breaking force, of less than 0.2%.

5. Tyre according to Claim 1 to 4, **characterized in that** the reinforcing elements of the working half-ply (35) have an angle β that is at least 10° greater than the smallest of the angles α₁, α₂, α₃, α₄.

6. Tyre according to one of Claims 1 to 5, **characterized in that** at least the reinforcing elements of the two continuous working (31, 32) plies radially closest to the carcass reinforcement make angles α₁, α₂ smaller than 12° and preferably smaller than 8° with the circumferential direction.

7. Tyre according to one of the preceding claims, **characterized in that** the protective reinforcement (36) is made up of at least two plies of elastic metal reinforcing elements.

8. Tyre according to Claim 7, **characterized in that** the protective reinforcement (36) is made up of at least two plies of elastic metal reinforcing elements that from one ply to the next cross one another.

## Patentansprüche

1. Luftreifen (1) für ein Schwerfahrzeug, der eine radiale Karkassenbewehrung (2) enthält, über der radial eine Arbeitsscheitelbewehrung angeordnet ist, die aus mindestens vier durchgehenden Arbeitsscheitellagen (31, 32, 33, 34) zusammengesetzt ist, welche von Verstärkungselementen gebildet werden, die sich von einer Lage zur nächsten kreuzen, indem sie mit der Umfangsrichtung Winkel α₁, α₂, α₃, α₄ bilden, die zwischen 5 und 30° liegen, wobei radial über der Arbeitsscheitelbewehrung eine Schutzbewehrung (36) liegt, die aus mindestens einer Lage von elastischen metallischen Verstärkungselementen zusammengesetzt ist, die mit der Umfangsrichtung einen Winkel γ bilden, der zwischen 10 und 30° liegt, wobei das Ende der Schutzbewehrung bezüglich der Enden der Arbeitslagen axial außen liegt, **dadurch gekennzeichnet, dass** die Arbeitsscheitelbewehrung auf jeder Seite der Umfangsmittelebene durch eine einzige halbe Arbeitslage (35) vervollständigt wird, deren Verstärkungselemente mit der Umfangsrichtung einen Winkel β von mehr als 30° bilden, dass die halbe Arbeitslage (35) radial innen und benachbart zur durchgehenden Arbeitslage (34) ist, die radial am weitesten außen liegt, dass ihr axial äußeres Ende zu den Enden der durchgehenden Arbeitslagen axial außen liegt, und dass die Verstärkungselemente der halben Arbeitslage (35), die Verstärkungselemente der radial am weitesten außen liegenden durchgehenden Arbeitslage (34) und die Verstärkungselemente der Schutzbewehrung (36), deren Ende zu den Enden der Arbeitslagen axial außen liegt, in der gleichen Richtung ausgerichtet sind.

2. Luftreifen nach Anspruch 1, **dadurch gekennzeichnet, dass** die halbe Arbeitslage (35) radial die Enden der durchgehenden Arbeitsscheitellagen (31, 32, 33) bedeckt, die in Bezug zu ihr radial innen liegen.

3. Luftreifen nach Anspruch 1 oder 2, **dadurch gekennzeichnet, dass** eine durchgehende Arbeitslage (32, 33, 34) axial breiter ist als die zu ihr radial innen liegende und benachbarte durchgehende Arbeitslage.

4. Luftreifen nach einem der Ansprüche 1 bis 3, **dadurch gekennzeichnet, dass** die durchgehenden Lagen (31, 32, 33, 34) und die halben Arbeitslagen (35) aus nicht dehnbaren metallischen Verstärkungselementen zusammengesetzt sind, die eine relative Längung, gemessen für 10 % der Bruchkraft, von weniger als 0,2 % haben.

5. Luftreifen nach Anspruch 1 bis 4, **dadurch gekennzeichnet, dass** die Verstärkungselemente der halben Arbeitslage (35) einen Winkel β um mindestens 10° größer als der kleinste der Winkel α₁, α₂, α₃, α₄ haben.

6. Luftreifen nach einem der Ansprüche 1 bis 5, **dadurch gekennzeichnet, dass** mindestens die Verstärkungselemente der zwei durchgehenden Arbeitslagen (31, 32), die radial der Karkassenbewehrung am nächsten sind, mit der Umfangsrichtung Winkel α₁, α₂ von weniger als 12° und vorzugsweise weniger als 8° bilden.

7. Luftreifen nach einem der vorhergehenden Ansprüche, **dadurch gekennzeichnet, dass** die
Schutzbewehrung (36) aus mindestens zwei Lagen von elastischen metallischen Verstärkungselementen zusammengesetzt ist.

8. Luftreifen nach Anspruch 7, **dadurch gekennzeichnet, dass** die Schutzbewehrung (36) aus mindestens zwei Lagen von elastischen metallischen Verstärkungselementen zusammengesetzt ist, die sich von einer Lage zur nächsten kreuzen.
